# EUROPÄISCHE PATENTANMELDUNG

(11) **EP 3 470 979 A1**
(43) Veröffentlichungstag der Anmeldung: **17.04.2019**
(21) Anmeldenummer: 18198555.7
(22) Anmeldetag: 04.10.2018
(51) Int. Cl.: G06F 9/451, G06F 9/50, B62D 15/02

(54) **FAHRERASSISTENZ-STEUERUNGSSYSTEM FÜR EIN FAHRZEUG**

(30) Priorität: 11.10.2017 DE 102017123581
(71) Anmelder: Valeo Schalter und Sensoren GmbH, 74321 Bietigheim-Bissingen (DE)
(72) Erfinder: Kreyer, Steve, 74321 Bietigheim-Bissingen (DE); Joos, Malte, 74321 Bietigheim-Bissingen (DE)

(57) **Zusammenfassung**

Die Erfindung betrifft ein Fahrerassistenz-Steuerungssystem (10) für ein Fahrzeug, mit einer fahrzeugseitigen computerbasierten Steuereinheit (12) zur Steuerung mindestens einer Fahrerassistenzfunktion (26) und mit einem über ein Netzwerk (20) mit der computerbasierten Steuereinheit (12) datenübertragungstechnisch verbindbaren computerbasierten Endgerät (16, 18), wobei das computerbasierte Endgerät (16, 18) mindestens eine Nutzerschnittstelle (14) zur Anzeige und/oder Bedienung der Fahrerassistenzfunktion (26) umfasst. Es ist vorgesehen, dass die computerbasierte Steuereinheit (12) einen WebSocket-Server (32) für eine Webanwendung bereitstellt, die über das computerbasierten Endgerät (16, 18) ausführbar ist, wobei die Benutzerschnittstelle (14) über die Webanwendung auf dem computerbasierten Endgerät (16, 18) realisiert ist. Ein entsprechender Datenaustausch kann dann insbesondere unter Verwendung des JSON Datenformats realisiert werden.

Die Erfindung betrifft weiterhin ein entsprechendes Verfahren zum Durchführen mindestens einer Fahrerassistenzfunktion (26) bei einem Fahrzeug und ein entsprechendes Computerprogrammprodukt.

## Beschreibung

Die vorliegende Erfindung betrifft ein Fahrerassistenz-Steuerungssystem für ein Fahrzeug, mit einer fahrzeugseitigen computerbasierten Steuereinheit zur Steuerung mindestens einer Fahrerassistenzfunktion und mit einem über ein Netzwerk mit der computerbasierten Steuereinheit datenübertragungstechnisch verbindbaren computerbasierten Endgerät, wobei das computerbasierte Endgerät mindestens eine Nutzerschnittstelle zur Anzeige und/oder Bedienung der Fahrerassistenzfunktion umfasst.

Die Erfindung betrifft weiterhin ein entsprechendes Verfahren zum Durchführen mindestens einer Fahrerassistenzfunktion bei einem Fahrzeug und ein entsprechendes Computerprogrammprodukt.

Das Dokument DE 2012 007 984 A1 beschreibt ein derartiges Fahrerassistenz-Steuerungssystem für ein Fahrzeug, mit einer fahrzeugseitigen computerbasierten Steuereinheit zur Steuerung einer automatischen Rangierfunktion und mit einem über eine WLAN-Datenverbindung mit der computerbasierten Steuereinheit datenübertragungstechnisch verbindbaren computerbasierten tragbaren Kommunikationsgerät, wobei das tragbare Kommunikationsgerät mindestens ein Betätigungselement zur Bedienung der automatischen Rangierfunktion umfasst. Dieses vom Endgerät bereitgestellte Betätigungselement ist eine Nutzerschnittstelle beziehungsweise ein Human-Machine-Interface (HMI).

Die beiden Subsysteme (a) fahrzeugseitige computerbasierte Steuereinheit und (b) auf dem computerbasierten Endgerät bereitgestellte Nutzerschnittstelle sind oft nur sehr spezifisch programmierbar. Des Weiteren sind die Protokolle zum Datenaustausch zwischen diesen beiden Subsystemen oft proprietär und nicht standardisiert. Um diese beiden Subsysteme zu erweitern ist oftmals spezielles Expertenwissen notwendig. Muss eine Änderung an einer Systemfunktion vorgenommen werden oder muss das System um neue Systemfunktionen erweitert werden, welche die Bedienung oder auch die Anzeige betreffen, ist deshalb mit einer langen TTM (Time-To-Market) zu rechnen. Des Weiteren ist die proprietäre HMI-Software nur auf dieser HMI-Hardware ausführbar. Ausgehend von dem oben genannten Stand der Technik liegt der Erfindung somit die Aufgabe zugrunde, Maßnahmen zur Durchführung mindestens einer Fahrerassistenzfunktion bei einem Fahrzeug anzugeben, die es ermöglichen, Änderungen am System oder der Systemfunktion relativ einfach durchzuführen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Bei dem erfindungsgemäßen Fahrerassistenz-Steuerungssystem für ein Fahrzeug, welches eine fahrzeugseitige computerbasierte Steuereinheit zur Steuerung mindestens einer Fahrerassistenzfunktion und ein über ein Netzwerk mit der computerbasierten Steuereinheit datenübertragungstechnisch verbindbares computerbasiertes Endgerät aufweist, welches mindestens eine Nutzerschnittstelle zur Anzeige und/oder Bedienung der Fahrerassistenzfunktion umfasst, ist vorgesehen, dass die computerbasierte Steuereinheit einen WebSocket-Server für eine Webanwendung bereitstellt, die über das computerbasierten Endgerät ausführbar ist, wobei die Benutzerschnittstelle über die Webanwendung auf dem computerbasierten Endgerät realisiert ist. Die Steuereinheit wird auch als ECU (ECU: Electronic Control Unit) bezeichnet. Die Webanwendung ist ein Anwendungsprogramm nach dem Client-Server-Modell, das nicht lokal auf dem Endgerät des Nutzers installiert und dort ausgeführt wird. Die Datenverarbeitung und - auswertung findet stattdessen hauptsächlich auf der den entsprechenden WebSocket-Server bereitstellenden Steuereinheit statt. Nur das Ergebnis der Datenverarbeitung wird zur Anzeige und Bedienung der Fahrerassistenzfunktion an das Endgerät des Nutzers übertragen.

Durch diese Maßnahme werden die beiden Subsysteme (a) fahrzeugseitige computerbasierte Steuereinheit und (b) auf dem computerbasierten Endgerät bereitgestellte Nutzerschnittstelle auf eine -zumindest für andere Anwendungen- weit verbreitete Weise miteinander verknüpft.

Gemäß einer bevorzugten Ausgestaltung der Erfindung ist auf dem computerbasierten Endgerät zumindest ein WebClient implementiert, über den die Webanwendung von einem Nutzer nutzbar ist. Dieser WebClient ist insbesondere ein Webbrowser und/oder eine Bedien- und/oder Anzeige-App. Die Webanwendung wird in vielen Fällen über eine Webseite und einen Webbrowser genutzt. Dieser Webbrowser übernimmt die Kommunikation mit dem Server über ein entsprechendes Protokoll sowie die Darstellung der Benutzeroberfläche. Alternativ ist insbesondere für mobile Endgeräte die Nutzung einer App (App: Applikation) als WebClient vorgesehen.

Dabei ist das System insbesondere für einen Datenaustausch zwischen der computerbasierten Steuereinheit und dem WebClient mittels des JSON Datenformats eingerichtet. Das JSON Datenformat oder Datenformat in JSON (JavaScript Object Notation) ist ein kompaktes Datenformat in einer verhältnismäßig einfach lesbaren Textform zum Zweck des Datenaustauschs, insbesondere zwischen Anwendungen wie Webanwendungen. Das JSON Datenformat eignet sich in diesem Zusammenhang besonders, da es sehr einfach ist und darüber hinaus auch geeignet ist, aus JavaScript Code (welcher durch den Webclient ausgeführt wird, um das HMI zu realisieren) auf die entsprechenden Informationen zugreifen zu können.

Gemäß einer weiteren bevorzugten Ausgestaltung der Erfindung ist vorgesehen, dass das Endgerät ein computerbasiertes mobiles Endgerät, insbesondere ein Smartphone, ist. Für mobile Endgeräte ist neben der Nutzung eines Webbrowsers auch die Nutzung einer App (App: Applikation) als WebClient vorgesehen. Ein weiteres mögliches mobiles Endgerät für das System ist ein Tablet-Computer.

Generell kann die Fahrerassistenzfunktion eine der vielen Funktionen eines Fahrerassistenz-Steuerungssystems sein, wie etwa adaptive Geschwindigkeitsregelfunktion, Bremsassistenzfunktion, Geschwindigkeitsassistenzfunktion, Spurhalteassistenzfunktion, etc. Gemäß noch einer weiteren bevorzugten Ausgestaltung der Erfindung ist die Fahrerassistenzfunktion eine Parkassistenzfunktion.

Gemäß einer bevorzugten Ausführungsform der Erfindung ist die computerbasierten Steuereinheit als eine in einen Automotive-Kontext eingebundene computerbasierte Steuereinheit ausgebildet. Ein eingebettetes System (englisch: embedded system) ist ein elektronischer Rechner (Computer, computerbasierte Einrichtung, etc.), der in einen technischen Kontext eingebunden (eingebettet) ist. Dabei übernimmt der Rechner entweder Überwachungs-, Steuerungs- oder Regelfunktionen oder ist für eine Form der Daten- bzw. Signalverarbeitung zuständig, beispielsweise beim Ver- bzw. Entschlüssein, Codieren bzw. Decodieren oder Filtern. Der Automotive-Kontext ist in der Regel eine entsprechende Fahrzeug-Baugruppe des Fahrzeugs.

Gemäß einer weiteren bevorzugten Ausführungsform der Erfindung ist vorgesehen, dass das Netzwerk als LAN oder WAN ausgebildet ist. Während LAN (Local Area Network) ein lokales Netzwerk ist, bei dem mehrere computerbasierten Geräte etwa im Haushalt oder in einer Firma intern über ein Netzwerk kommunizieren und Dateien austauschen können, ist WAN (Wide Area Network) ein großräumiges Netzwerk, welches beispielsweise aus mehreren LANs besteht und sich großräumig, also auch über Länder oder Kontinente, ausbreitet. Für das System wird bevorzugt ein Ethernet basiertes LAN (Local Area Network) oder WAN (Wide Area Network) genutzt, an welchem der Webclient und der Server (die Embedded ECU) angeschlossen sind.

Bei dem erfindungsgemäßen Verfahren zum Durchführen mindestens einer Fahrerassistenzfunktion bei einem Fahrzeug, mit einer fahrzeugseitigen computerbasierten Steuereinheit zur Steuerung der Fahrerassistenzfunktion und mit einem über ein Netzwerk mit der computerbasierten Steuereinheit datenübertragungstechnisch verbindbaren computerbasierten Endgerät, welches mindestens eine Nutzerschnittstelle zur Anzeige und/oder Bedienung der Fahrerassistenzfunktion umfasst, ist vorgesehen, dass die computerbasierte Steuereinheit einen WebSocket-Server für eine Webanwendung bereitstellt, die über das computerbasierten Endgerät ausgeführt wird, wobei die Benutzerschnittstelle über die Webanwendung auf dem computerbasierten Endgerät realisiert wird. Das Verfahren wird insbesondere mittels des vorstehend genannten Fahrerassistenz-Steuerungssystems für ein Fahrzeug durchgeführt.

Gemäß einer bevorzugten Ausführungsform der Erfindung ist auf dem computerbasierten Endgerät zumindest ein WebClient, insbesondere ein Webbrowser und/oder eine Bedien- und/oder Anzeige-App, implementiert, über den die Webanwendung von einem Nutzer genutzt wird.

Gemäß noch einer bevorzugten Ausführungsform der Erfindung erfolgt ein Datenaustausch zwischen der computerbasierten Steuereinheit und dem WebClient mittels des JSON Datenformats (JSON: JavaScript Object Notation).

Bei dem erfindungsgemäßen Computerprogrammprodukt ist vorgesehen, dass dieses Programmteile umfasst, die in einem Prozessor einer computerbasierten Steuereinheit geladen zur Durchführung des vorstehend genannten Verfahrens eingerichtet sind.

Nachfolgend wird die Erfindung unter Bezugnahme auf die anliegende Zeichnung anhand einer bevorzugten Ausführungsform näher erläutert.

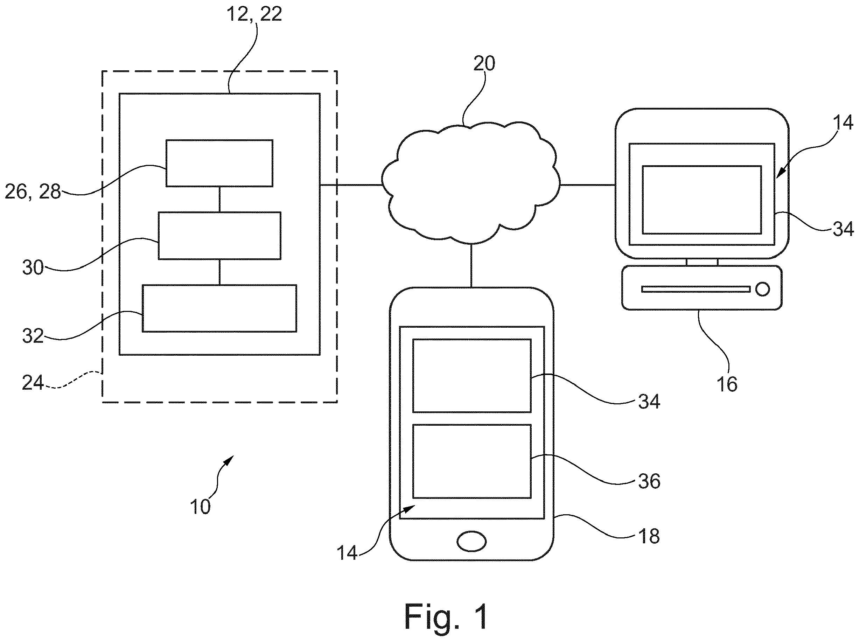

Es zeigt
- Fig. 1: ein Fahrerassistenz-Steuerungssystem für ein Kraftfahrzeug gemäß einer bevorzugten Ausführungsform der Erfindung.

In Fig. 1 ist in einer schematischen Darstellung ein Fahrerassistenz-Steuerungssystem 10 für ein nicht gezeigtes Kraftfahrzeug dargestellt. Das System 10 umfasst als wesentliche funktionelle Komponenten eine fahrzeugseitige Steuereinheit (ECU: Electronic Control Unit) 12 und zumindest eine Nutzerschnittstelle 14, die von einem computerbasierten Endgerät 16 bereitgestellt wird, das insbesondere auch als mobiles computerbasiertes Endgerät 18 ausgebildet sein kann. Im gezeigten Beispiel der Figur 1 ist ein eher stationäres computerbasiertes Endgerät 16, nämlich ein PC (PC: Personal Computer), und ein mobiles computerbasiertes Endgerät 18, nämlich ein Smartphone dargestellt. Die Steuereinheit 12 und die Endgeräte 16, 18 sind über ein Netzwerk 20 datenübertragungstechnisch miteinander verbunden. Die hier gezeigte Steuereinheit (ECU) 12 ist eine eingebettete Steuereinheit (embedded ECU), die in einen entsprechenden Automotive-Kontext 24, in der Regel eine entsprechende Fahrzeug-Baugruppe des Fahrzeugs, eingebunden ist. Die Steuereinheit 12 stellt über ihre Hard- und Softwarekomponenten eine Fahrerassistenzfunktion 26, im vorliegenden Fall eine Parkassistenzfunktion 28, zur Verfügung. Bezüglich des Fahrerassistenz-Steuerungssystems 10 bildet die Steuereinheit 12 einen WebServer für eine Webanwendung. Dabei erfolgt ein Datenaustausch zwischen der den Server bildenden Steuereinheit 12 und den die Clients bildenden Endgeräten 16, 18 über Daten im JSON Datenformat 30. Die Steuereinheit 12 stellt weiterhin auch einen WebSocket-Server 32 für die Webanwendung bereit. Auf den Endgeräten 16, 18 befinden sich die entsprechenden Webclients 34, 36. Diese sind als Webbrowser 34 und Bedien- und/oder Anzeige-App 36 ausgestaltet. Im Rahmen des entsprechenden Webclients 34, 36 werden die Nutzerschnittstellen 14 gebildet, also beispielsweise ein mittels Mausklick anklickbarer Button oder ein über ein Touchscreen verschiebbarer Schiebeschalter im Browser 34.

Die Webanwendung ist ein Anwendungsprogramm nach dem Client-Server-Modell, das nicht lokal auf den Endgeräten 16, 18 des Nutzers installiert und dort ausgeführt wird. Die Datenverarbeitung und -auswertung findet stattdessen hauptsächlich auf der den entsprechenden WebSocket-Server 32 bereitstellenden Steuereinheit 12, 22 statt. Nur das Ergebnis der Datenverarbeitung wird zur Anzeige und Bedienung der Fahrerassistenzfunktion an die Endgeräte 16, 18 der Nutzer übertragen.

Durch diese Maßnahme werden die beiden Subsysteme (a) fahrzeugseitige computerbasierte Steuereinheit 12 und (b) auf dem computerbasierten Endgerät 16, 18 bereitgestellte Nutzerschnittstelle 14 auf eine durchaus weit verbreitete Weise miteinander verknüpft. Bei dem System 10 erfolgt also ein Datenaustausch im JSON Datenformat zwischen der computerbasierten Steuereinheit 12 und den WebClients 34, 36. Das JSON Datenformat oder Datenformat in JSON (JavaScript Object Notation) ist ein kompaktes Datenformat in einer verhältnismäßig einfach lesbaren Textform zum Zweck des Datenaustauschs, insbesondere zwischen Webanwendungen. Das JSON Datenformat ist darüber hinaus auch geeignet, aus JavaScript Code - welcher durch den Webclient ausgeführt wird, um das HMI zu realisieren - auf die entsprechenden Informationen zugreifen zu können.

Im Folgenden werden Eigenschaften und Vorzüge des gezeigten Systems 10 noch einmal mit anderen Worten beschrieben.

Das Fahrerassistenz-Steuerungssystem 10 umfasst:
Eine Embedded ECU 22 mit einer Fahrerassistenzfunktion 26, wie beispielweise einer Parkassistenzvorrichtung 28, die einen auf Websocket (RFC 6455) und TCP (Transmission Control Protocol)/ IP (Internet Protocol) basierten Server-Kommunikationsport implementiert.

Einen oder mehrere Web Clients 34, 36 (bspw. einen Webbrowser 34 oder eine Smartphone-App 36) zur Anzeige und Bedienung der Fahrerassistenzfunktion 26 über die Nutzerschnittstelle (HMI) 14.

Einen Datenaustausch zwischen dem Client (Webclient 34, 36) und dem Server (Embedded) ECU 12, 22 mit über Daten 30 im JSON (Java Script Object Notation) (RFC 7159) Format.

Ein als Ethernet-basiertes LAN (Local Area Network) oder WAN (Wide Area Network) ausgebildetes Netzwerk 20, an welchem die Hardware des Webclient 34, 36, also die Endgeräte 16, 18 sowie die Steuereinheit 12 (Embedded ECU 22) als Server angeschlossen sind.

Es ergeben sich die folgenden Vorteile:
Die Embedded ECU 22 implementiert eine JSON Schnittstelle welche die entsprechenden Daten 30 zur Anzeige und Bedienung der Parkassistenzvorrichtung 28 definiert. Diese wird über den Websocket-basierten Server-Kommunikationsport 32 einem über das Netzwerk 20 verbundenen Webclient 34, 36 zur Verfügung gestellt.

Der Einsatz dieser Webtechnologien macht es möglich die Fahrerassistenzfunktion 26 jedem Webbasierten Client 16, 18 zur Verfügung zu stellen. Somit kann eine Nutzerschnittstelle (HMI) 14 sowohl als Smartphone-App 36 als auch als Website in jedem generischen Webbrowser 34 realisiert werden. Eine Nutzerschnittstelle (HMI) 14 implementiert als Website hat weiterhin den Vorteil dass diese von jedem beliebigen Gerät 16, 18 welches einen Webbrowser 34 integriert hat (bspw. ein Smartphone 18 oder PC (Personal Computer) 16 ausgeführt werden kann.

Durch die starke Standardisierung der verwendeten Kommunikationstechnologien kann in kürzester Zeit eine Nutzerschnittstelle (HMI) 14 zur Anzeige und Bedienung implementiert werden. Auch können Änderungen an einer Systemfunktion und neue Systemfunktionen bzgl. Anzeige und Bedienung in kürzester Zeit implementiert werden und helfen somit die TTM entsprechend zu verkürzen.

Die Fig. 1 zeigt ein mögliches Setup. Webbrowser 34 und App Ausführungsumgebungen haben bereits den Websocket (RFC 6455) und JSON (RFC 7159) Standard integriert. Applikationen wie Webseiten in Kombination mit einem Browser 34 oder Apps 36 dienen somit als Websocket Client 34, 36 welche sich zu einem Websocket-Server (implementiert durch die Embedded ECU) verbinden können. Somit kann die Parkassistenzvorrichtung 28, ausgeführt auf der Steuereinheit (ECU) 12, von fern über einen WAN/LAN Zugriff bedient werden und Ergebnisse dieser Fahrerassistenzfunktion können auf dem Smartphone 18 oder dem PC 16 dargestellt werden.

**Bezugszeichenliste**

| | |
|---|---|
| Fahrerassistenz-Steuerungssystem | 10 |
| Steuereinheit (ECU) | 12 |
| Nutzerschnittstelle (HMI) | 14 |
| Computerbasiertes Endgerät (PC) | 16 |
| Computerbasiertes mobiles Endgerät | 18 |
| Netzwerk | 20 |
| Eingebettete Steuereinheit (ECU) | 22 |
| Automotive-Kontext | 24 |
| Fahrerassistenzfunktion | 26 |
| Parkassistenzfunktion | 28 |
| Daten im JSON Datenformat | 30 |
| Websocket-Server | 32 |
| Webbrowser | 34 |
| App, insbesondere mobile App | 36 |

## Patentansprüche

1. Fahrerassistenz-Steuerungssystem (10) für ein Fahrzeug, mit einer fahrzeugseitigen computerbasierten Steuereinheit (12) zur Steuerung mindestens einer Fahrerassistenzfunktion (26) und mit einem über ein Netzwerk (20) mit der computerbasierten Steuereinheit (12) datenübertragungstechnisch verbindbaren computerbasierten Endgerät (16, 18), wobei das computerbasierte Endgerät (16, 18) mindestens eine Nutzerschnittstelle (14) zur Anzeige und/oder Bedienung der Fahrerassistenzfunktion (26) umfasst,
**dadurch gekennzeichnet, dass** die computerbasierte Steuereinheit (12) einen WebSocket-Server (32) für eine Webanwendung bereitstellt, die über das computerbasierten Endgerät (16, 18) ausführbar ist, wobei die Benutzerschnittstelle (14) über die Webanwendung auf dem computerbasierten Endgerät (16, 18) realisiert ist.

2. System nach Anspruch 1, **dadurch gekennzeichnet, dass** auf dem computerbasierten Endgerät (16, 18) zumindest ein WebClient (34, 36), insbesondere ein Webbrowser (34) und/oder eine Bedien- und/oder Anzeige-App (36), implementiert ist, über den die Webanwendung von einem Nutzer nutzbar ist.

3. System nach Anspruch 2, **dadurch gekennzeichnet, dass** das System für einen Datenaustausch von Daten im JSON Datenformat (30) zwischen der computerbasierten Steuereinheit (12) und dem WebClient (34, 36) eingerichtet ist.

4. System nach einem der Ansprüche 1 bis 3, **dadurch gekennzeichnet, dass** das Endgerät (16, 18) ein computerbasiertes mobiles Endgerät (18), insbesondere ein Smartphone, ist.

5. System nach einem der Ansprüche 1 bis 4, **dadurch gekennzeichnet, dass** die Fahrerassistenzfunktion (26) eine Parkassistenzfunktion (28) ist.

6. System nach einem der Ansprüche 1 bis 5, **dadurch gekennzeichnet, dass** die computerbasierten Steuereinheit (12) als eine in einen Automotive-Kontext (24) eingebundene computerbasierte Steuereinheit (22) ausgebildet ist.

7. System nach einem der Ansprüche 1 bis 6, **dadurch gekennzeichnet, dass** das Netzwerk (30) als LAN oder WAN ausgebildet ist.

8. Verfahren (10) zum Durchführen mindestens einer Fahrerassistenzfunktion (26) bei einem Fahrzeug, mit einer fahrzeugseitigen computerbasierten Steuereinheit (12) zur Steuerung der Fahrerassistenzfunktion (26) und mit einem über ein Netzwerk (20) mit der computerbasierten Steuereinheit (12) datenübertragungstechnisch verbindbaren computerbasierten Endgerät (16, 18), wobei das computerbasierte Endgerät (16, 18) mindestens eine Nutzerschnittstelle (14) zur Anzeige und/oder Bedienung der Fahrerassistenzfunktion umfasst, **dadurch gekennzeichnet, dass** die computerbasierte Steuereinheit (12) einen WebSocket-Server (32) für eine Webanwendung bereitstellt, die über das computerbasierten Endgerät (16, 18) ausgeführt wird, wobei die Benutzerschnittstelle (14) über die Webanwendung auf dem computerbasierten Endgerät (16, 18) realisiert wird.

9. Verfahren nach Anspruch 8, **dadurch gekennzeichnet, dass** auf dem computerbasierten Endgerät (16, 18) zumindest ein WebClient (34, 36), insbesondere ein Webbrowser (34) und/oder eine Bedien- und/oder Anzeige-App (36), implementiert ist, über den die Webanwendung von einem Nutzer genutzt wird.

10. Verfahren nach Anspruch 9, **dadurch gekennzeichnet, dass** ein Datenaustausch von Daten im JSON Datenformat (30) zwischen der computerbasierten Steuereinheit (12) und dem WebClient (34, 36) erfolgt.

11. Computerprogrammprodukt umfassend Programmteile, die in einem Prozessor einer computerbasierten Steuereinheit (12) geladen zur Durchführung des Verfahrens nach einem der Ansprüche 8 bis 10 eingerichtet sind.
